# EUROPEAN PATENT SPECIFICATION

(11) **EP 3 558 028 B1**
(45) Date of publication and mention of the grant of the patent: **24.09.2025**
(21) Application number: 17826223.4
(22) Date of filing: 20.12.2017
(51) Int. Cl.: A23B 70/30, A23B 11/137, A23B 2/42, A23B 2/40, F22B 37/60, F22B 37/00, F22B 27/00

(54) **HEAT TREATMENT PLANT AND METHOD FOR OPERATING A HEAT TREATMENT PLANT**
WÄRMEBEHANDLUNGSANLAGE UND VERFAHREN ZUM BETRIEB EINER WÄRMEBEHANDLUNGSANLAGE
INSTALLATION DE TRAITEMENT THERMIQUE ET PROCÉDÉ DE FONCTIONNEMENT D'UNE INSTALLATION DE TRAITEMENT THERMIQUE

(30) Priority: 23.12.2016 DK PA201671047
(43) Date of publication of application: 30.10.2019
(73) Proprietor: SPX Flow Technology Danmark A/S, 8600 Silkeborg (DK)
(72) Inventor: POULSEN, Ole, 7442 Engesvang (DK)
(74) Representative: Nordic Patent Service A/S
(86) International application number: PCT/EP2017/083833
(87) International publication number: WO 2018/115131

(56) References cited:
- WO-A1-2016/087359
- WO-A1-2018/038692
- GB-A- 789 767
- US-A- 5 544 571
- ANONYMOUS: "Multipurpose UHT Pilot Plant", 24 June 2016 (2016-06-24), pages 1 - 8, XP002778962, Retrieved from the Internet <URL:https://web.archive.org/web/20160701000000*/http://www.spxflow.com/en/assets/pdf/APV_Multipurpose_UHT_Pilot_Plant_SPP_6752_06_04_2013_GB_tcm11-7192.pdf> [retrieved on 20180309]
- ANONYMOUS: "Steam Compressors", 29 November 2016 (2016-11-29), XP002779112, Retrieved from the Internet <URL:https://web.archive.org/web/20161129063900/https://www.tlv.com/global/TI/steam-theory/steam-compressors.html> [retrieved on 20180314]

## Description

### TECHNICAL FIELD

The disclosure relates to a plant for ultra-high temperature treatment of fluid foodstuffs such as milk or milk based products, baby food, or nutritious drinks, the plant comprising a direct heat treatment apparatus in which the fluid is heat treated by way of supply of steam. The disclosure further relates to a method of operating such a plant.

### BACKGROUND

In a UHT plant (Ultra High Temperature plant), steam is e.g. sprayed into a fluid foodstuff in an infusion chamber, in such a manner that the fluid foodstuff is heated to a temperature of approximately 140° C. Subsequently, the fluid foodstuff is fed to a so-called holding chamber in which the fluid foodstuff is kept for a predetermined period (approximately 2 to 15 sec) in the heated state. Thereafter, the fluid foodstuff is transferred to a flash vessel in which the water deriving from the steam is removed in such a manner that the solid content of the fluid foodstuff leaving the flash vessel is the same as that which was fed into the infusion chamber, before being subjected to the heat treatment. After being processed in the flash vessel, the fluid foodstuff is usually transferred to a homogenizer and then subjected to cooling and packing.

EP 0 794 706 discloses an infusion plant for high temperature treatment of fluid foodstuffs such as whey protein concentrate and cheese milk. The plant has an infusion chamber, in which the fluid is subjected to heat treatment by means of steam fed into the infusion chamber. The foodstuff is introduced at the top of the infusion chamber as a bundle of separate and mainly downwardly directed jets. The lower section of the infusion chamber serves to collect the foodstuff and has cooled walls provided with a cooling jacket. An outlet opening of the infusion chamber is arranged at the bottom of the infusion chamber and the outlet opening is connected to the inlet of a positive-displacement pump. The outlet of the positive-displacement pump is connected to the inlet of a vacuum chamber that serves to remove water from the foodstuff that was added during the steam infusion.

US 4,419,301 discloses a process for heating fluids to a sterilization temperature. The fluid is heated by direct contact with steam while it is in the form of a very thin, freefalling film or continues falling stream. After the sterilization process the added steam is removed in a flash vessel and the generated steam is condensed to a condensate, which is discarded.

GB789767A discloses a plant for heat treating fluid foodstuffs, such as milk, milk based products, baby food, baby food liquid concentrates, or nutritious drinks, the plant comprising: a steam infusion chamber having a fluid foodstuff inlet arranged at a top of the heat treatment apparatus, a fluid foodstuff outlet arranged at a bottom of the heat treatment apparatus, and a first steam inlet arranged approximately in the middle of the height of the heat treatment apparatus, the fluid foodstuff being subjected to heat treatment by feeding either live steam or flash steam into the heat treatment apparatus, the live steam being fed into the heat treatment apparatus by means of a live steam conduit connected to the first steam inlet, a flash vessel having a fluid foodstuff inlet at a top of the flash vessel and a fluid foodstuff outlet at a bottom of the flash vessel, the fluid foodstuff outlet of the steam infusion chamber being connected to the fluid foodstuff inlet of the flash vessel by means of a conduit, the fluid foodstuff outlet of the flash vessel being connected to a conduit and a pump for draining off fluid foodstuff from the flash vessel, the flash vessel further comprising a flash steam outlet arranged at the top of the flash vessel, the flash steam outlet being connected to a flash steam conduit, the flash steam conduit being connected to an inlet of a compression arrangement, wherein the flash steam conduit is adapted for feeding the flash steam to the compression arrangement, in which compression arrangement the flash steam is compressed, and a second flash steam conduit is connected to an outlet of the compression arrangement, the second flash steam conduit being adapted for transferring the flash steam to the steam infusion chamber through the first steam inlet. The plant is configured for sequentially feeding live steam or flash steam into the steam infusion chamber.

The infusion plant uses high temperature for a short period of time in order to kill micro-organisms. This technology is widely used in the dairy industry where products can lose their nutritional value, flavor, and appearance as micro-organisms multiply. These organisms thrive at certain temperatures but if they are not present in a product, the product can be stored for many months without the need for refrigeration. Steam infusion achieves this objective with minimal heat degradation compared to other UHT processes.

It helps protect essential components such as vitamins and results in fresh tasting products with outstanding quality. It provides the necessary kill rate for commercial sterility and can handle a wide product viscosity range, covering fluids from milk, puddings, ice cream, baby food, condensed milk, processed cheese, sauces, and creams to lotions.

There is a constant need for improving the design and function of heat treatment plants such as infusion plants in order to achieve a process which is increasingly cost and energy effective and more environmentally friendly than prior art.

### SUMMARY

It is an object of the invention to provide an infusion plant for ultra-high treatment of fluid foodstuffs which is more cost effective and more environmentally friendly than prior art due to improved internal heat recovery.

This object is achieved according to a first aspect of the invention by providing a plant for heat treating fluid foodstuffs, such as milk, milk based products, baby food, baby food liquid concentrates, or nutritious drinks, the plant comprising: a steam infusion chamber having a fluid foodstuff inlet arranged at a top of the steam infusion chamber, a fluid foodstuff outlet arranged at a bottom of the steam infusion chamber, and a first steam inlet arranged at a top of the steam infusion chamber, the fluid foodstuff being subjected to heat treatment by feeding live steam and flash steam into the steam infusion chamber, the live steam being fed into the steam infusion chamber by means of a live steam conduit connected to the first steam inlet, a flash vessel having a fluid foodstuff inlet at a top of the flash vessel and a fluid foodstuff outlet at a bottom of the flash vessel, the fluid foodstuff outlet of the steam infusion chamber being connected to the fluid foodstuff inlet of the flash vessel by means of a conduit and a pump, the fluid foodstuff outlet of the flash vessel being connected to a conduit and a pump for draining off fluid foodstuff from the flash vessel, the flash vessel further comprising a flash steam outlet arranged at the top of the flash vessel, the flash steam outlet being connected to a flash steam conduit, the flash steam conduit being connected to an inlet of a compression arrangement, wherein the flash steam conduit is adapted for feeding the flash steam to the compression arrangement, in which compression arrangement the flash steam is compressed, and a second flash steam conduit is connected to an outlet of the compression arrangement, the second flash steam conduit being adapted for transferring the flash steam to the steam infusion chamber, wherein the plant is configured to feed live steam into said steam infusion chamber through the first steam inlet and simultaneously flash steam through the first steam inlet or a second steam inlet arranged at the top of said steam infusion chamber .

The invention allows the low-pressure waste flash steam of a UHT plant to be reused instead of just being released to the atmosphere. When steam condenses, around 25% of its heat remains in the heat-treated fluid foodstuff. With a flash steam recovery system, such as that of the invention, around half of this heat can be recovered and reused.

In a first possible implementation form of the first aspect, the second flash steam conduit is connected to the live steam conduit, allowing the steam infusion chamber to have only one steam inlet.

In a second possible implementation form of the first aspect, the second flash steam conduit is connected to a second steam inlet arranged at the top of the steam infusion chamber, providing a solution where one can regulate the injection of live steam and flash steam independently of each other.

In a third possible implementation form of the first aspect, the thermal vapor recompression device is configured to compress the flash steam up to 5 bar.

In a fourth possible implementation form of the first aspect, the compression arrangement comprises at least one compression device, facilitating mechanical compression of the flash steam to a higher pressure such that it can be reused.

In a fifth possible implementation form of the first aspect, the compression arrangement comprises two compression devices connected in series, allowing steam pressure to be reduced in suitably large steps.

In a sixth possible implementation form of the first aspect, the compression device comprises a steam compressor.

In a seventh possible implementation form of the first aspect, the compression device comprises a heat pump.

In an eighth possible implementation form of the first aspect, the compression device comprises a turbine, facilitating transfer of high steam volumes.

In a ninth possible implementation form of the first aspect, the compression device comprises a turbocharger, further reducing the amount of energy needed to operate the plant.

In a tenth possible implementation form of the first aspect, the live steam is generated by means of a steam boiler, which is a simple and reliable solution.

In an eleventh possible implementation form of the first aspect, the steam boiler is adapted for providing steam to the turbocharger, removing the need for powering the turbocharger separately.

In a twelfth possible implementation form of the first aspect, the conduit and pump are adapted for transferring the fluid foodstuff to an aseptic homogenizer.

In a thirteenth possible implementation form of the first aspect, the fluid foodstuffs are heat-sensitive.

In a fourteenth possible implementation form of the first aspect, the plant does not comprise a condenser connected to an outlet of the flash vessel.

The object is achieved according to a second aspect of the invention by means of a method for operating a ultra-high temperature treatment plant with a steam infusion chamber, in which fluid foodstuff is subjected to heat treatment by means of live and flash steam, the method comprising: feeding the fluid foodstuff into the steam infusion chamber, feeding live steam and flash steam simultaneously into the steam infusion chamber, removing the fluid foodstuff from the steam infusion chamber, feeding the fluid foodstuff into a flash vessel, removing the fluid foodstuff from the flash vessel, removing flash steam from the flash vessel, feeding the flash steam to a compressor arrangement, the compressor arrangement compressing the flash steam, where after the flash steam is fed into the steam infusion chamber. The method allows the low-pressure waste flash steam of a UHT plant to be reused instead of just being released to the atmosphere. When steam condenses, around 25% of its heat remains in the heat-treated fluid foodstuff. With a flash steam recovery system, such as that of the invention, around half of this heat can be recovered and reused.

In a first possible implementation form of the second aspect, the compressor arrangement comprises two compressor devices arranged in series, and the flash steam is compressed incrementally by means of the compressor devices. Such a solution facilitates stepwise mechanical compression of the flash steam.

In a second possible implementation form of the second aspect, at least two of the steps are executed simultaneously.

In a third possible implementation form of the second aspect, the method further comprises feeding the flash steam through a thermal vapor recompression device, after having compressed the flash steam in the compressor arrangement and prior to feeding the flash steam into the steam infusion chamber.

The foregoing and other objects are achieved by the features of the independent claims. Further implementation forms are apparent from the dependent claims, the description, and the figure.

These and other aspects of the invention will be apparent from the figure and the embodiments described below.

### BRIEF DESCRIPTION OF THE DRAWINGS

In the following detailed portion of the present disclosure, the invention will be explained in more detail with reference to the example embodiment shown in the drawing, in which:

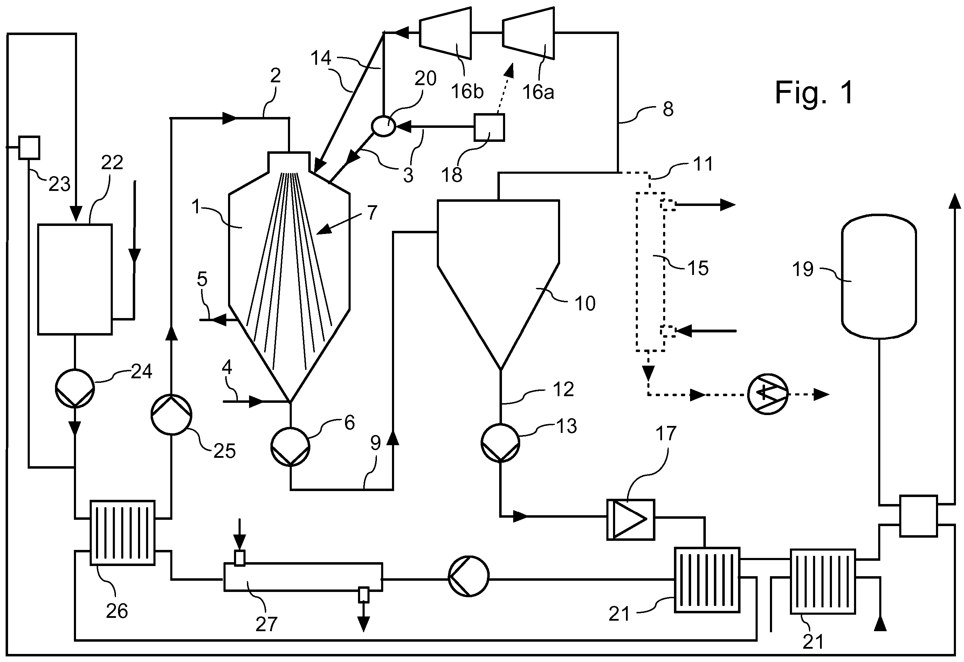

Fig. 1 is a diagrammatic view of an embodiment of an ultra-high temperature treatment plant.

### DETAILED DESCRIPTION

Fig. 1 shows a plant for ultra-high temperature treatment of liquid foodstuff. The liquid foodstuff can be any foodstuff in liquid form, but the disclosed plant is particularly useful for temperature sensitive foodstuffs that should be heated for killing bacteria for a short period only so as to preserve their flavor, consistency, and nutritious qualities. Examples of such liquid foodstuffs are milk, milk based products, baby food, baby food liquid concentrates, or nutritious drinks. The liquid foodstuff may have a high dry matter content (40% and higher) and/or high protein content (6% or higher).

The fluid foodstuff is initially stored in a tank 22. The tank 22 is connected to a sterilization loop 23 in which the foodstuff is sterilized. The fluid foodstuff is transferred from the tank 22 by means of a conduit 2 and pumps 24, 25 to a steam infusion chamber1. Midway, the conduit 2 is connected to a plate heat exchanger 26 for preheating the fluid foodstuff from approximately 5 °C to approximately 75 °C.

The fluid foodstuff enters the steam infusion chamber1, e.g. a steam infusion chamber, as a bundle of separate liquid foodstuff jets 7 through a plurality of openings in a nozzle at the top of the steam infusion chamber 1. Hot steam is injected into the steam infusion chamber 1 through a steam inlet, e.g. a circumferential steam distribution chamber. In the steam infusion chamber 1 the liquid foodstuff jets meet the hot steam and the foodstuff is thereby heated and absorbs the steam.

The steam infusion chamber 1 is preferably essentially rotation symmetrical around a vertical axis. The upper section of the steam infusion chamber 1 has a hollow cylindrical part and a top part that is shaped similar to a conical frustum. A bottom section is releasably connected to the upper section by a flanged connection for allowing access to the interior of the steam infusion chamber 1 for cleaning and/or maintenance. The bottom section has in an embodiment a shape similar to a conical frustum.

Further, the steam infusion chamber 1 is connected to conduits 4 and 5 used for feeding and removing liquid, e.g. water, for cooling the bottom of the steam infusion chamber 1. A cooling jacket, connected to the conduits 4, 5, may be provided around the bottom section. The cooling jacket keeps the bottom section cool to prevent or minimize the liquid foodstuff that gets into contact with the inner walls of the bottom section to foul or burn-on. The cooling jacket provides for a mantle of cooling water or other cooling medium around the bottom section. The mantle is divided by a spiral traverse wall that guides the cooling water in a spiral pattern around the bottom section. The cooling medium inlet passes through a pump housing and into a portion of the mantle that extends also into the pump housing. From the portion internal to the pump housing the spiral path of the cooling medium continues spirally upwards towards a cooling medium outlet, connected to conduit 5, at the top of the cooling jacket and near the top of the bottom section.

The liquid foodstuff jets end on the funnel shaped inner wall of the bottom section. The bottom section collects the liquid foodstuff from the liquid foodstuff jets and guides it to the outlet opening at the lower end of the steam infusion chamber 1, which is also the lower end of the bottom section and which is also the inlet of the pump 6.

The lower portion of the bottom section forms the outlet opening of the steam infusion chamber 1 which, in one embodiment, connects seamlessly to the inlet of the pump 6 and, in another embodiment, is just connected to pump 6. This is, in one embodiment, achieved by the lower end of the bottom section being made from steel plates, preferably stainless steel, and connected to the pump housing by welds. In an embodiment, the pump housing is provided with a circular ridge or circular upright flange that facilitates welding of the pump housing to the lower end of the bottom section. After welding the transition between the bottom section and the pump housing/pump inlet formed by the welds is machined to provide a perfectly smooth surface without and cracks or fissures that could be difficult to clean or rinse.

The pump 6 may be a centrifugal pump or a positive displacement pump. The pump 6 is of a conventionally known type, e.g. a gear or lobe pump, and connected to the outlet of the steam infusion chamber 1. The housing of the pump 6 is provided with a temperature sensor at a location where the adjacent surface is kept clean of burnings by means of e.g. the teeth of the gear wheels or by the lobes of the rotors. In this manner, it is possible to ensure a reliable control of the plant. In another embodiment, the temperature sensor is a pin probe sensor located directly after the pump 6, at the start of conduit 9.

The outlet of the pump 6 is connected to the inlet of a flash vessel 10, e.g. a vacuum chamber, of a conventionally known type by means of a conduit 9. In one embodiment conduit 9 includes a valve at the end of conduit 9, just before flash vessel 10.

The flash vessel 10 is adapted for removing the water which was added to the fluid foodstuff during heat treatment in the steam infusion chamber 1. The excess water, added by the steam during the heat treatment, is removed through a steam conduit 8. The concentrated fluid foodstuff is drained off through a conduit 12 and a pump 13 in a conventionally known manner, and is preferably transferred to an aseptic homogenizer 17. Thereafter, the homogenized fluid foodstuff is cooled by means of one or several plate heat exchangers 21, from approximately 75 °C down to approximately 20 °C, and transferred to a storage unit 19 or a packaging process.

The plate heat exchangers 21 and 26 are connected in a continuous heating/cooling loop, along with a water heater 27, which heats the heating water just before it enters preheater 26.

In prior art, low-pressure steam, such as flash steam, is usually vented to the atmosphere or condensed in a cooling tower. Instead, low-pressure waste steam can be mechanically compressed to a higher pressure such that it can be reused. Steam tables show that when steam condenses, around 25% of its heat remains in the condensate, i.e. the concentrated fluid foodstuff. With a flash steam recovery system, such as that shown in Fig. 1, around half of this heat can be recovered as flash steam. However, the UHT process requires that the flash steam, which is in direct contact with the foodstuff, is of food quality.

The steam infusion chamber 1 has a fluid foodstuff inlet arranged at the top of the steam infusion chamber 1, a fluid foodstuff outlet arranged at the bottom of the steam infusion chamber 1, and a first steam inlet also arranged at the top of the steam infusion chamber 1. By "top" is meant an upper section of the steam infusion chamber, and by "bottom" is meant a lower section of the steam infusion chamber, as seen when the steam infusion chamber is arranged such that it extends essentially vertically.

Heat-sensitive fluid foodstuff is fed to the fluid foodstuff inlet by means of conduit 2, and is subjected to heat treatment, within the steam infusion chamber 1, by feeding live steam and flash steam into the steam infusion chamber 1. By "live steam" is meant steam which is generated, e.g., by means of a steam boiler 18. By "flash steam" is meant steam which is recovered from the flash vessel. The live steam is fed into the steam infusion chamber 1, through the first steam inlet, by means of a live steam conduit 3. The other end of the steam conduit 3 is connected to a steam boiler 18. Steam boiler 18 produces steam at approximately 7-15 bar. The steam which is fed into the steam infusion chamber 1 has a pressure of approximately 5 bar. A control valve may therefore be used to throttle back the amount of steam and create a pressure drop from 7-15 bar and down to 5 bar. In a preferred embodiment, a turbocharger reuses this pressure drop as power driving the turbocharger.

The flash vessel 10 has a fluid foodstuff inlet at the top of the flash vessel 10 and a fluid foodstuff outlet at the bottom of the flash vessel 10. By "top" is meant an upper section of the flash vessel, and by "bottom" is meant a lower section of the flash vessel, as seen when the flash vessel is arranged such that it extends essentially vertically.

The fluid foodstuff outlet of the steam infusion chamber 1 is connected to the fluid foodstuff inlet of the flash vessel 10 by means of a conduit 9 and a pump 6. The fluid foodstuff outlet of the flash vessel 10 is connected to a conduit 12 and a pump 13 for draining off fluid foodstuff from the flash vessel 10.

The flash vessel 10 comprises a flash steam outlet arranged at the top of the flash vessel 10. The flash steam outlet is connected to a first flash steam conduit 8. As the flash steam exits the flash vessel 10, it has a temperature of approximately 70 °C and an absolute pressure which is approximately 0,3 bar.

The first flash steam conduit 8 is connected to the inlet of the compression arrangement 16, and is used for feeding the flash steam from the flash vessel 10 to the compression arrangement 16. The flash steam is thereafter compressed within the compression arrangement, to approximately 5-7 bar and a temperature of approximately 150 °C.

The outlet of the compression arrangement 16 is connected to a second flash steam conduit 14 which is used for transferring the flash steam to the steam infusion chamber 1. In one embodiment, the second flash steam conduit 14 is connected to the live steam conduit 3 such that live steam and flash steam is mixed before entering the steam infusion chamber 1 through the first steam inlet. In another embodiment, the second flash steam conduit 14 is connected directly to a second steam inlet arranged at the top of the steam infusion chamber 1. In this embodiment, live steam is fed into the steam infusion chamber 1 through the first steam inlet and flash steam is fed into the steam infusion chamber 1 through the second steam inlet. Both of these embodiments may be combined.

Further, the second flash steam conduit 14 may be connected to a device for thermal vapor recompression 20, also known as TVR. If the flash steam, when leaving the compression arrangement 16, has a pressure under 5 bar, e.g. 4 bar, thermal vapor recompression may be used to compress the flash steam further up to 5 bar. The thermal vapor recompression device 20 is connected to the second flash steam conduit 14 and to the live steam conduit 3. The thermal vapor recompression device compresses the flash steam by a maximum of 1 bar.

The compression arrangement 16 comprises one compression device 16a, or two compression devices 16a, 16b connected in series. When connected in series, the flash steam conduit 8 is connected to the inlet of a first compression device 16a, and the second flash steam conduit 14 is connected to the outlet of a second compression device 16b. Otherwise, the flash steam conduit 8 is connected to the inlet of the compression device 16a, and the second flash steam conduit 14 is connected to the outlet of the same compression device 16a.

The compression device 16a, 16b may comprise a steam compressor, a heat pump, or a turbine. A turbine may be more efficient in transferring high volumes. The compression device 16a, 16b may also comprise a turbocharger, which is powered by steam provided by the previously mentioned control valve/steam boiler. The turbocharger may increase the energy savings further, since the energy used to drive the turbocharger is "free". The steam pressure from the steam boiler is, as previously mentioned, much higher than that which is needed in the steam infusion chamber 1. Today's prior art is provided with a steam throttle valve between the boiler and the steam infusion chamber. This throttle valve reduces the steam pressure from 7-15 bar down to 4 bar, and all of the high-pressure energy is lost as friction energy in the throttle. When using a turbocharger instead of a throttle valve, the high-pressure steam is lead through the drive turbine of the turbocharger, and is in this way provided with almost free power to drive the turbocharger.

The compression arrangement 16 may comprise two identical kinds of compression devices, such as two steam compressors, or two different kinds of compression devices, such as a steam compressor and a turbine.

In prior art, the first flash steam conduit 8 would be connected to a condenser conduit 11 instead of said compression device 16a, 16b. The condenser conduit 11 is connected to a condenser 15, and feeds the flash steam to the condenser 15. The flash steam is cooled in the condenser and subsequently released into the atmosphere.

The UHT plant is operated by means of the following method. The method comprises a number of steps, executed in a continuous loop. However, at least two of these steps are executed simultaneously.

Fluid foodstuff is fed into the steam infusion chamber 1. Simultaneously, live steam is fed into the steam infusion chamber 1 through a first steam inlet and flash steam is fed through the first steam inlet or the second steam inlet, such that the fluid foodstuff is heat treated by the live steam and the flash steam. After heat treatment, the fluid foodstuff is removed from the steam infusion chamber 1 and fed into a flash vessel 10. Condensed fluid foodstuff is, after treatment, removed from the lower section of the flash vessel 10. Simultaneously, flash steam is removed from the upper section of the flash vessel 10. The flash steam is thereafter fed to a compressor arrangement 16. The compressor arrangement 16 compresses the flash steam from approximately -0,7 bar to approximately 5 bar. The flash steam is preferably compressed incrementally by means of two compressor devices 16a, 16b, connected in series.

After compression, the flash steam is fed into the infusion chamber 1. However, in one embodiment, the method further comprises the step of feeding the flash steam through a thermal vapor recompression device 20, after having compressed the flash steam in the compressor arrangement 16 and prior to feeding the flash steam into the steam infusion chamber 1.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word comprising" does not exclude other elements or steps, and the indefinite article "a"or "an" does not exclude a plurality.

The mere fact that certain measures are recited in mutually different dependent claims does not indicate that a combination of these measures cannot be used to advantage. The reference signs used in the claims shall not be construed as limiting the scope.

## Claims

1. A plant for heat treating fluid foodstuffs, such as milk, milk based products, baby food, baby food liquid concentrates, or nutritious drinks, said plant comprising:
a steam infusion chamber (1) having a fluid foodstuff inlet arranged at a top of said steam infusion chamber (1), a fluid foodstuff outlet arranged at a bottom of said steam infusion chamber (1), and a first steam inlet arranged at a top of said steam infusion chamber (1), said fluid foodstuff being subjected to heat treatment by feeding live steam and flash steam into said steam infusion chamber (1), said live steam being fed into said steam infusion chamber (1) by means of a live steam conduit (3) connected to said first steam inlet,
a flash vessel (10) having a fluid foodstuff inlet at a top of said flash vessel (10) and a fluid foodstuff outlet at a bottom of said flash vessel (10), the fluid foodstuff outlet of said steam infusion chamber (1) being connected to the fluid foodstuff inlet of said flash vessel (10) by means of a conduit (9) and a pump (6), the fluid foodstuff outlet of said flash vessel (10) being connected to a conduit (12) and a pump (13) for draining off fluid foodstuff from said flash vessel (10),
said flash vessel (10) further comprising a flash steam outlet arranged at the top of said flash vessel (10),
said flash steam outlet being connected to a first flash steam conduit (8),
said first flash steam conduit (8) being connected to an inlet of a compression arrangement (16), said first flash steam conduit (8) being adapted for feeding said flash steam to said compression arrangement (16), in which compression arrangement (16) said flash steam is compressed,
a second flash steam conduit (14) being connected to an outlet of said compression arrangement (16), said second flash steam conduit (14) being adapted for transferring said flash steam to said steam infusion chamber (1),
wherein the plant is configured to feed live steam into said steam infusion chamber (1) through the first steam inlet and simultaneously flash steam through the first steam inlet or a second steam inlet arranged at the top of said steam infusion chamber (1).

2. A plant according to claim 1, wherein said second flash steam conduit (14) is connected to said live steam conduit (3).

3. A plant according to any one of the preceding claims, wherein said second flash steam conduit (14) is connected to said second steam inlet.

4. A plant according to any one of the preceding claims, wherein said compression arrangement (16) comprises at least one compression device (16a, 16b).

5. A plant according to claim 4, wherein said compression arrangement (16) comprises two compression devices (16a, 16b) connected in series.

6. A plant according to claim 4 or 5, wherein said compression device (16a, 16b) comprises a steam compressor.

7. A plant according to any one of claims 4 to 6, wherein said compression device (16a, 16b) comprises a heat pump.

8. A plant according to any one of claims 4 to 7, wherein said compression device (16a, 16b) comprises a turbine and/or a turbocharger.

9. A plant according to any one of the preceding claims, wherein said live steam is generated by means of a steam boiler (18).

10. A plant according to claims 8 and 9, wherein said steam boiler (18) is adapted for providing steam to said turbocharger.

11. A method for operating an ultra-high temperature treatment plant with a steam infusion chamber (1), in which fluid foodstuff is subjected to heat treatment by means of live and flash steam, said method comprising:
- feeding said fluid foodstuff into said steam infusion chamber (1),
- feeding live steam and flash steam simultaneously into said steam infusion chamber (1),
- removing said fluid foodstuff from said steam infusion chamber (1),
- feeding said fluid foodstuff into a flash vessel (10),
- removing said fluid foodstuff from said flash vessel (10),
- removing flash steam from said flash vessel (10),
- compressing said flash steam in a compressor arrangement (16), and
- feeding said flash steam into said steam infusion chamber (1).

12. A method according to claim 11, wherein said compressor arrangement (16) comprises two compressor devices (16a, 16b) arranged in series, and said flash steam is compressed incrementally by means of said compressor devices (16a, 16b).

13. A method according to any one of claims 11 or 12, further comprising feeding said flash steam through said thermal vapor recompression device (20), after having compressed said flash steam in said compressor arrangement (16) and prior to feeding said flash steam into said steam infusion chamber (1).

## Patentansprüche

1. Anlage zur Wärmebehandlung von flüssigen Nahrungsmitteln, wie Milch, Produkten auf Milchbasis, Babynahrung, flüssige Babynahrungskonzentrate oder nahrhafte Getränke, wobei die Anlage umfasst:
eine Dampfinfusionskammer (1) mit einem Einlass für flüssige Nahrungsmittel, der an einer Oberseite der Dampfinfusionskammer (1) angeordnet ist, einem Auslass für flüssige Nahrungsmittel, der an einer Unterseite der Dampfinfusionskammer (1) angeordnet ist, und einem ersten Dampfeinlass, der an einer Oberseite der Dampfinfusionskammer (1) angeordnet ist, wobei das flüssige Nahrungsmittel einer Wärmebehandlung unterzogen wird, indem Frischdampf und Entspannungsdampf in die Dampfinfusionskammer (1) eingeführt werden, wobei der Frischdampf in die Dampfinfusionskammer (1) mittels einer Frischdampfleitung (3) eingeführt wird, die mit dem ersten Dampfeinlass verbunden ist,
einen Entspannungsbehälter (10) mit einem Einlass für flüssige Nahrungsmittel an einer Oberseite des Entspannungsbehälters (10) und einem Auslass für flüssige Nahrungsmittel an einer Unterseite des Entspannungsbehälters (10), wobei der Auslass für flüssige Nahrungsmittel der Dampfinfusionskammer (1) mit dem Einlass für flüssige Nahrungsmittel des Entspannungsbehälters (10) mittels einer Leitung (9) und einer Pumpe (6) verbunden ist, wobei der Auslass für flüssige Nahrungsmittel des Entspannungsbehälters (10) mit einer Leitung (12) und einer Pumpe (13) zum Ablassen von flüssigen Nahrungsmitteln aus dem Entspannungsbehälter (10) verbunden ist,
wobei der Entspannungsbehälter (10) ferner einen Entspannungsdampfauslass umfasst, der an der Oberseite des Entspannungsbehälters (10) angeordnet ist,
wobei der Entspannungsdampfauslass mit einer ersten Entspannungsdampfleitung (8) verbunden ist,
wobei die erste Entspannungsdampfleitung (8) mit einem Einlass einer Kompressionsanordnung (16) verbunden ist, wobei die erste Entspannungsdampfleitung (8) dazu ausgelegt ist, den Entspannungsdampf der Kompressionsanordnung (16) einzuführen, wobei der Entspannungsdampf in der Kompressionsanordnung (16) komprimiert wird,
wobei eine zweite Entspannungsdampfleitung (14) mit einem Auslass der Kompressionsanordnung (16) verbunden ist, wobei die zweite Entspannungsdampfleitung (14) dazu ausgelegt ist, den Entspannungsdampf an die Dampfinfusionskammer (1) weiterzuleiten,
wobei die Anlage dazu konfiguriert ist, Frischdampf in die Dampfinfusionskammer (1) durch den ersten Dampfeinlass und gleichzeitig Entspannungsdampf durch den ersten Dampfeinlass oder einen zweiten Dampfeinlass, der an der Oberseite der Dampfinfusionskammer (1) angeordnet ist, einzuführen.

2. Anlage nach Anspruch 1, wobei die zweite Entspannungsdampfleitung (14) mit der Frischdampfleitung (3) verbunden ist.

3. Anlage nach einem der vorhergehenden Ansprüche, wobei die zweite Entspannungsdampfleitung (14) mit dem zweiten Dampfeinlass verbunden ist.

4. Anlage nach einem der vorhergehenden Ansprüche, wobei die Kompressionsanordnung (16) mindestens eine Kompressionsvorrichtung (16a, 16b) umfasst.

5. Anlage nach Anspruch 4, wobei die Kompressionsanordnung (16) zwei in Reihe geschaltete Kompressionsvorrichtungen (16a, 16b) umfasst.

6. Anlage nach Anspruch 4 oder 5, wobei die Kompressionsvorrichtung (16a, 16b) einen Dampfkompressor umfasst.

7. Anlage nach einem der Ansprüche 4 bis 6, wobei die Kompressionsvorrichtung (16a, 16b) eine Wärmepumpe umfasst.

8. Anlage nach einem der Ansprüche 4 bis 7, wobei die Kompressionsvorrichtung (16a, 16b) eine Turbine und/oder einen Turbolader umfasst.

9. Anlage nach einem der vorhergehenden Ansprüche, wobei der Frischdampf mittels eines Dampfkessels (18) erzeugt wird.

10. Anlage nach Anspruch 8 und 9, wobei der Dampfkessel (18) dazu ausgelegt ist, dem Turbolader Dampf bereitzustellen.

11. Verfahren zum Betreiben einer Ultrahochtemperatur-Behandlungsanlage mit einer Dampfinfusionskammer (1), in der flüssige Nahrungsmittel einer Wärmebehandlung mittels Frischdampf und Entspannungsdampf unterzogen werden, wobei das Verfahren umfasst:
- Einführen des flüssigen Nahrungsmittels in die Dampfinfusionskammer (1),
- Einführen von Frischdampf und Entspannungsdampf gleichzeitig in die Dampfinfusionskammer (1),
- Entnehmen des flüssigen Nahrungsmittels aus der Dampfinfusionskammer (1),
- Einführen des flüssigen Nahrungsmittels in einen Entspannungsbehälter (10),
- Entnehmen des flüssigen Nahrungsmittels aus dem Entspannungsbehälter (10),
- Entnehmen von Entspannungsdampf aus dem Entspannungsbehälter (10),
- Komprimieren des Entspannungsdampfes in einer Kompressoranordnung (16), und
- Einführen des Entspannungsdampfes in die Dampfinfusionskammer (1).

12. Verfahren nach Anspruch 11, wobei die Kompressoranordnung (16) zwei in Reihe angeordnete Kompressoreinrichtungen (16a, 16b) umfasst und der Entspannungsdampf mittels der Kompressoreinrichtungen (16a, 16b) schrittweise komprimiert wird.

13. Verfahren nach einem der Ansprüche 11 oder 12, ferner umfassend das Einführen des Entspannungsdampfes durch die thermische Dampf-Rekompressionsvorrichtung (20), nachdem der Entspannungsdampf in der Kompressoranordnung (16) komprimiert wurde und bevor der Entspannungsdampf in die Dampfinfusionskammer (1) eingeführt wird.

## Revendications

1. Installation pour le traitement thermique de produits alimentaires fluides, tels que du lait, des produits à base de lait, des aliments pour bébés, des concentrés liquides alimentaires pour bébés ou des boissons nutritives, ladite installation comprenant :
une chambre d'infusion de vapeur (1) qui possède une entrée de produit alimentaire fluide agencée au sommet de ladite chambre d'infusion de vapeur (1), une sortie de produit alimentaire fluide agencée au fond de ladite chambre d'infusion de vapeur (1), et une première entrée de vapeur agencée au sommet de ladite chambre d'infusion de vapeur (1), ledit produit alimentaire fluide étant soumis à un traitement thermique par l'introduction de vapeur vive et de vapeur détendue dans ladite chambre d'infusion de vapeur (1), ladite vapeur vive étant introduite dans ladite chambre d'infusion de vapeur 15 (1) au moyen d'une conduite de vapeur vive (3) raccordée à ladite première entrée de vapeur,
un récipient de détente (10) qui possède une entrée de produit alimentaire fluide au sommet dudit récipient de détente (10) et une sortie de produit alimentaire fluide au fond dudit récipient de détente (10), la sortie de produit alimentaire fluide de ladite chambre d'infusion de vapeur (1) étant raccordée à l'entrée de produit alimentaire fluide dudit récipient de détente (10) au moyen d'une conduite (9) et d'une pompe (6), la sortie de produit alimentaire fluide dudit récipient de détente (10) étant raccordée à une conduite (12) et à une pompe (13) pour évacuer le produit alimentaire fluide dudit récipient de détente (10),
ledit récipient de détente (10) comprenant en outre une sortie de vapeur détendue agencée au sommet dudit récipient de détente (10),
ladite sortie de vapeur détendue étant raccordée à une première conduite de vapeur détendue (8),
ladite première conduite de vapeur détendue (8) étant raccordée à une entrée d'un agencement de compression (16), ladite première conduite de vapeur détendue (8) étant adaptée pour acheminer ladite vapeur détendue jusqu'à l'agencement de compression (16) dans lequel ladite vapeur de compression (16) est comprimée,
une seconde conduite de vapeur détendue (14) étant raccordée à une sortie dudit agencement de compression (16), ladite seconde conduite de vapeur détendue (14) étant adaptée pour transférer ladite vapeur détendue vers ladite chambre d'infusion de vapeur (1),
l'installation étant configurée pour introduire de la vapeur vive dans ladite chambre d'infusion de vapeur (1) au moyen de la première entrée de vapeur et, simultanément, pour y introduire de la vapeur détendue au moyen de la première entrée de vapeur ou d'une seconde entrée de vapeur agencée au sommet de ladite chambre d'infusion de vapeur (1).

2. Installation selon la revendication 1, dans laquelle ladite seconde conduite de vapeur détendue (14) est raccordée à ladite conduite de vapeur vive (3).

3. Installation selon l'une quelconque des revendications précédentes, dans laquelle ladite seconde conduite de vapeur détendue (14) est raccordée à ladite seconde entrée de vapeur.

4. Installation selon l'une quelconque des revendications précédentes, dans laquelle ledit agencement de compression (16) comprend au moins un dispositif de compression (16a, 16b).

5. Installation selon la revendication 4, dans laquelle ledit agencement de compression (16) comprend deux dispositifs de compression (16a, 30, 16b) raccordés en série.

6. Installation selon la revendication 4 ou 5, dans laquelle ledit dispositif de compression (16a, 16b) comprend un compresseur de vapeur.

7. Installation selon l'une quelconque des revendications 4 à 6, dans laquelle ledit dispositif de compression (16a, 16b) comprend une pompe à chaleur.

8. Installation selon l'une quelconque des revendications 4 à 7, dans laquelle ledit dispositif de compression (16a, 16b) comprend une turbine et/ou un turbocompresseur.

9. Installation selon l'une quelconque des revendications précédentes, dans laquelle ladite vapeur vive est générée au moyen d'une chaudière à vapeur (18).

10. Installation selon les revendications 8 et 9, dans laquelle ladite chaudière à vapeur (18) est adaptée pour fournir de la vapeur audit turbocompresseur.

11. Procédé de fonctionnement d'une installation de traitement à ultra-haute température comportant une chambre d'infusion de vapeur (1), dans lequel un produit alimentaire fluide est soumis à un traitement thermique au moyen de vapeur vive et de vapeur détendue, ledit procédé comprenant :
- l'introduction dudit produit alimentaire fluide dans ladite chambre d'infusion de vapeur (1),
- l'introduction simultanée de vapeur vive et de vapeur détendue dans ladite chambre d'infusion de vapeur (1),
- l'évacuation dudit produit alimentaire fluide de ladite chambre d'infusion de vapeur (1),
- l'introduction dudit produit alimentaire fluide dans un récipient de détente (10),
- l'évacuation dudit produit alimentaire fluide dudit récipient de détente (10),
- l'évacuation de la vapeur détendue dudit récipient de détente (10),
- la compression de ladite vapeur détendue dans un agencement de compression (16)
et
- l'introduction de ladite vapeur détendue dans ladite chambre d'infusion de vapeur (1).

12. Procédé selon la revendication 11, dans lequel ledit agencement de compression (16) comprend deux dispositifs de compression (16a, 16b) agencés en série, et ladite vapeur détendue est progressivement comprimée au moyen desdits dispositifs de compression (16a, 16b).

13. Procédé selon l'une quelconque des revendications 11 ou 12, comprenant en outre l'introduction de ladite vapeur détendue à travers ledit dispositif de recompression de vapeur thermique (20) après avoir comprimé ladite vapeur détendue dans ledit agencement de compression (16) et avant d'introduire ladite vapeur détendue dans ladite chambre d'infusion de vapeur (1).
